# EUROPEAN PATENT APPLICATION

(11) **EP 4 661 144 A1**
(43) Date of publication of application: **10.12.2025**
(21) Application number: 24181110.8
(22) Date of filing: 10.06.2024
(51) Int. Cl.: H01M 10/0585, H01M 50/538, H01M 4/139, H01M 4/66, H01M 50/533, G06K 19/06, H01M 10/052

(54) **A METHOD FOR PRODUCING A BATTERY**

(30) Priority: 07.06.2024 EP 24180909
(71) Applicant: Renata AG, 4452 Itingen (CH)
(72) Inventor: HAERING, Pascal, 4147 Aesch (CH); WU, Han, Pembroke Pines, 33029 (US); EL BARADAI, Oussama, 4057 Basel (CH)
(74) Representative: ICB SA

(57) **Abstract**

One or more markers (15, 16) are produced on at least one of the tabs (4, 7) of the electrodes (2, 5) which form the basic components of the battery. The electrodes include at least one pair of a first electrode (2) and a second electrode (5), each having a coated foil portion (3, 6) and a non-coated tab (4, 7). The markers can be indicative of technical and/or reference information related to the electrode to which the marked tab is attached, or of information regarding required manipulations of the electrode to which the marked tab is attached, wherein the method includes reading a marker on the marked tab and performing a manipulation of the electrode based on information derived from said marker.

## Description

### Field of the Invention

The present invention is related to batteries, in particular to batteries comprising electrodes in the form of coated foils provided with non-coated tabs.

### State of the art.

In many commercially produced batteries, the electrodes are obtained from metal foils provided with an active coating. A battery cell of this type may be produced by a variety of production techniques, including winding, folding and stacking. According to one stacking technique, multiple planar so-called monocells are stacked together, each monocell comprising a first electrode, usually a cathode, inserted between two separator sheets. The separator sheets are joined together along the perimeter of the cathode by heat or adhesive to form a pocket having the same shape and dimensions as the anode. The anode is attached to the pocket to thereby form the monocell. Multiple stacked monocells are then placed into a metal container and tabs extending from the electrodes are welded together for connection to the contacts of the battery. The container is filled with a liquid electrolyte before final sealing. Alternatively, the stacked monocells can be integrated in an aluminium laminate pouch.

Another technique wherein electrodes are stacked is known as the Z-folding method: cathodes and anodes are alternately stacked and a continuous separator sheet is interwoven in serpentine-fashion with the stacked electrodes.

The production of battery cells of various shapes and of batteries comprising these cells takes place in dedicated production facilities according to suitable production techniques. In the case of stacked monocell batteries for example, this includes cutting electrodes from a continuous metal foil comprising an active coating thereon, and assembling the cut-out electrodes and separator sheets, followed by stacking and interconnecting multiple cells. A number of challenges present themselves in terms of the efficiency and speed of the production process: cut-out electrodes need to be aligned correctly according to a predefined orientation of the tabs relative to the electrodes. In some cases, the stacking order of the electrodes to form a battery is predefined and not random, for example when monocells of different in-plane dimensions are stacked together. When these challenges are inadequately addressed, they may be the cause of production errors and material loss.

### Summary of the invention

The invention is related to a method for producing a battery in accordance with the appended claims. According to the method of the invention, one or more markers are produced on at least one of the tabs of the electrodes which form the basic components of the battery. The electrodes include at least one pair of a first electrode and a second electrode, each having a coated foil portion and a non-coated tab. The markers are indicative of one or more of the following:
- technical and/or reference information related to the electrode to which the marked tab is attached. Reference information is information that allows to identify a particular electrode, and may include for example a serial number or a date of production.
- information regarding required manipulations of the electrode to which the marked tab is attached, wherein the method includes reading a marker on the marked tab and performing a manipulation of the electrode based on information derived from said marker.

The invention thereby enables an increased reliability and efficiency of a battery production process, as well as an increased degree of automation, as will be illustrated in more detail on the basis of a number of embodiments.

### Brief description of the figures

Figure 1 illustrates a prior art monocell suitable for producing a stacked monocell battery.
Figures 2a to 2d illustrate the four components of the monocell shown in Figure 1.
Figure 3 illustrates an example of a monocell similar to the prior art monocell of Figure 1, but now provided with markers on the tabs, in accordance with an embodiment of the invention.
Figure 4 is another example of a monocell produced according to the invention.
Figures 5a to 5c and 6a to 6c illustrate the use of an orientation-related marker in a production process of the monocell shown in Figure 4.
Figure 7a to 7c illustrate the possible use of a marker related to the stacking order of monocells having different dimensions.
Figure 8 illustrates the Z-folding technique to which the invention may be applied.

### Detailed description of embodiments of the invention

A number of embodiments are described hereafter, with reference to the drawings. Most of the described embodiments are related to batteries of the stacked monocell type. The invention is however applicable also to batteries obtained by other methods, such as the winding technique or the Z-folding technique. A reference to these techniques and the applicability of the invention therein is included at the end of the detailed description.

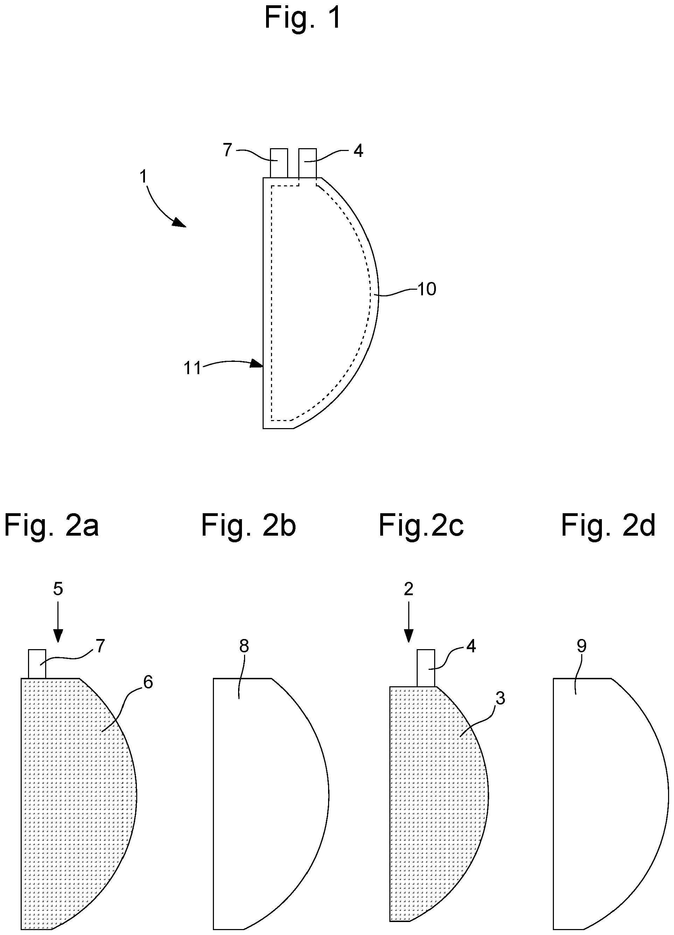

Figure 1 illustrates a prior art monocell 1 suitable for producing a battery using the monocell stacking method. The monocell 1 comprises a number of superposed parts shown separately in Figures 2a to 2d. At the bottom of the monocell is one of the electrodes. In this exemplary case, it is the anode 5, shown in Figure 2a but it could also be the cathode. The anode is formed of a metal foil comprising a coated electrode portion 6 and a non-coated tab 7. The anode coating may be a graphite coating in the case of a rechargeable lithium-ion battery. The tab 7 is integral with the anode foil, i.e. the tab is a non-coated portion of the foil extending out from the coated portion 3. Alternatively, the tab 7 could be a separate piece of foil fixed to the coated electrode portion 6 by a weld connection for example. The anode 5 is cut in the form of a `D' which is merely one exemplary monocell shape. Other shapes are possible.

On top of the anode 5 is a pocket 11 comprising a first and second separator sheet with the cathode inserted between said sheets. The cathode 2 is shown in Figure 2c and is also formed of a metal foil having a coated portion 3 and a non-coated tab 4 that is integral with or welded to the coated portion 3. The cathode coating may comprise lithium cobalt oxide or another lithium based active component in the case of a rechargeable lithium-ion battery. The separator sheets 8 and 9, shown separately in Figures 2b and 2d are attached to each other along the perimeter of the coated cathode portion 3, in an attachment lane 10 indicated with the help of dotted lines in Figure 1. The attachment lane 10 is interrupted at the location where the cathode tab 4 extends out of the pocket 11. In the assembled monocell 1, the cathode tab 4 lies adjacent and close to the anode tab 7. Alternatively, the tabs could be placed further apart or for example on opposite sides of the monocell. The outer perimeter of the coated portion 6 of the anode 5 corresponds to the outer perimeter of the cathode-containing pocket 11. The anode 5 may be attached to the cathode-containing pocket 11 by an adhesive or the layers of the monocell 1 may be assembled by a lamination process for example.

According to embodiments of the invention applied to a stacked monocell battery, one or more markers are produced on the cathode tab and/or on the anode tab of the monocell. The markers are indicative of one or more types of information related to the electrodes, as set out hereafter in more detail on the basis of a number of embodiments.

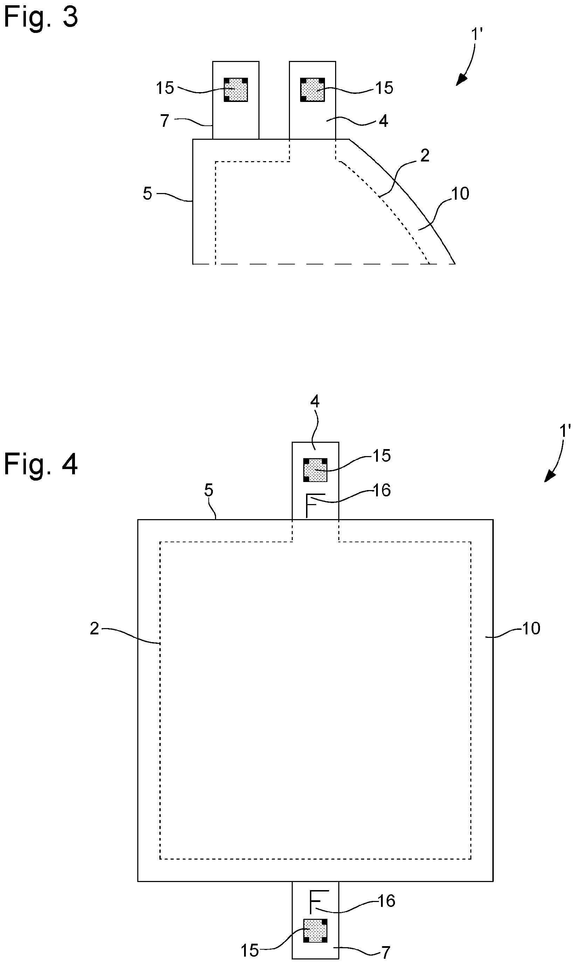

Figure 3 shows the tabs 4 and 7 of a monocell 1' having the same D-shape as the prior art monocell shown in Figure 1, but now provided with markers 15 both on the cathode tab 4 and on the anode tab 7.

The markers 15 in this exemplary case are QR codes legible by a digital code reader. Other digital codes are possible, for example bar codes. The information encoded by the respective markers may be related to technical data concerning the cathode 2 and the anode 5, such as the shape of the electrodes, the type of coating material, the coating thickness or other. Alternatively or in addition thereto, the encoded data could refer to reference information, such as the serial number of this electrode and the serial number of the completes cell after the assembly, the production date and location of the electrode, etc. As will be illustrated by a number of examples later in this description, markers may be included which are indicative of required manipulations of the electrodes during the battery production process.

The markers 15 may be applied by any suitable marking means, such as by engraving with a laser beam for example. The markers may be produced on the tabs before, during, or after cutting out the electrodes 2 and 5 from respective continuous foils and prior to the assembly of the monocell 1'. The production process of the electrodes includes cutting out the electrodes from coated foils or from foils having a non-coated strip to one side so that the tab may be cut from said non-coated strip. Alternatively, the coating may be removed from the tab by a suitable treatment such as laser ablation, or the tab may be cut out from a separate foil and joined to the coated electrode by welding. The markers 15 could be engraved on the continuous foils at the intended tab location before cutting out the electrodes and tabs from the foils, or the foils can be cut before engraving the markers on the cut-out tabs. The electrodes may be cut out completely from the continuous foils to obtain separate electrodes which are to be handled and manipulated in the subsequent assembly of the monocell. The invention is however applicable to other production processes for producing a monocell. For example, as described in patent application number EP24172900.3 incorporated herein by reference, one of the electrodes could be cut out partially from one of the coated foils, and alignment openings can be provided in both foils and in continuous separator sheets, after which the foils and separator sheets are aligned and assembled in a continuous production line. In the latter case, the production of markers on the tabs may be integrated as a stage in the continuous production line, for example performed by laser engraving on the foils before or after cutting the foils, using the same laser installation used also for partially cutting out one of the electrode shapes and the alignment openings from the continuous foils and separator sheets.

The technical and/or reference information encoded in the markers 15 may be used to facilitate the assembly process of the monocell itself and/or of a battery comprising multiple monocells stacked together. The information is readable by a sensor, for example a standard QR code reader included in a monocell assembly line. This enables an increased degree of automation of the assembly line: for example, electrodes having a specific coating type may be selected on the basis of the detected marker. Electrodes of different shapes may be presented to the sensor, and based on the marker information, the electrodes may be transported to a part of the production line dedicated to that particular electrode shape.

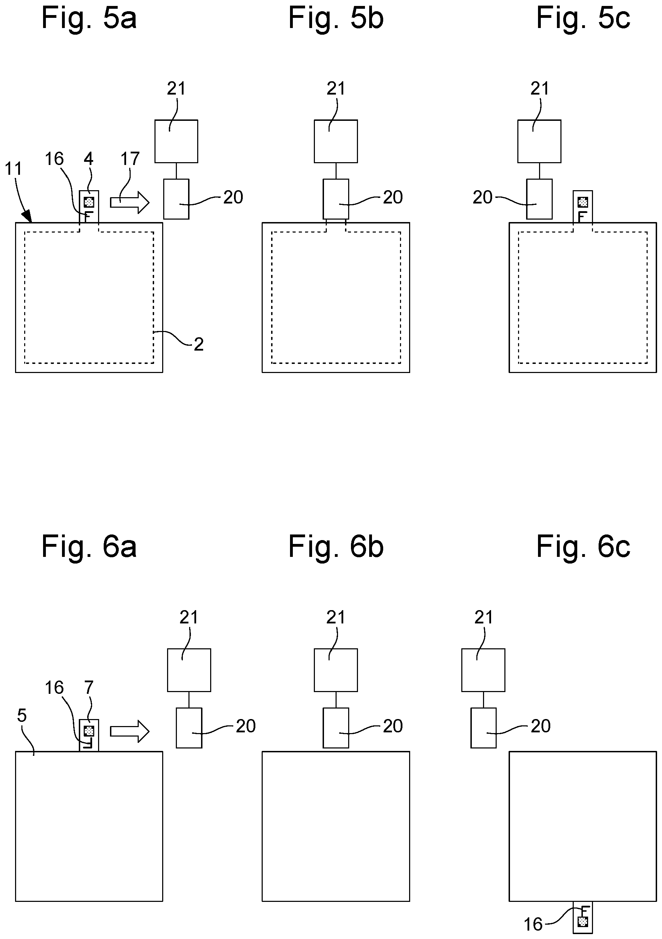

An example is now given of a marker that is indicative of required manipulations of the electrodes during the assembly of a monocell, with reference to Figure 4. The figure shows a monocell 1' comprising a rectangular cathode 2 and a rectangular anode 5, with the respective cathode and anode tabs 4 and 7 extending on opposite sides of the monocell. It is seen that in addition to the QR code markers 15 (possibly referring to technical and/or reference data of the respective electrodes), the tabs are provided with markers 16 in the form of the letter 'F'. This is an example of an asymmetric marker that can be read out by an optical sensor during the assembly process of the monocell. Aspects of this process are illustrated conceptually in Figures 5 and 6. In this particular exemplary process, the cathode and anode are cut out completely and then handled to form the monocell. In the manner described above, and with reference to Figure 5a, the cathode 2 is sandwiched between two separator sheets attached to each other along an attachment lane 10, thereby forming a pocket 11 containing the cathode 2, with the cathode tab 4 extending out of the pocket 11.

This cathode-containing pocket 11 is then placed on a level surface. As illustrated in Figure 5a, the pocket 11 may be transported (in the direction of the arrow 17) on a horizontal conveyor (not shown) in the direction of an optical sensor 20 positioned for reading the marker 16 when the tab 4 passes beneath the sensor 20. Detection of the orientation of the horizontal legs of the 'F' marker 16 on the cathode tab 4 allows to detect whether the pocket 11 is face down or face up when presented to the optical sensor 20. This presupposes that the 'F' marker is legible on both sides of the tab, which can be achieved for example by producing the marker through laser engraving. If the pocket 11 is face down, the pocket is first flipped and replaced on the level surface. In the case shown in Figures 5b and 5c, the 'F' marker 16 is in the normal position, and flipping of the pocket 11 is not required.

Then the anode 5 is presented to the sensor 20, as illustrated in Figures 6a and 6b. The sensor detects that the 'F' marker 15 is upside-down. From this detection, it is derived that the required manipulation is an in-plane rotation over 180°C (i.e. while maintaining the anode in the same plane), as illustrated in Figure 6c, in order to produce the monocell shown in Figure 4. The 'F' orientation can also be detected visually followed by a manual or semiautomatic manipulation of the electrodes, i.e. without requiring a specific sensor coupled to a control unit.

The manipulations of flipping and rotating the electrodes are performed by suitable manipulation tools known as such and operated automatically by command signals issued by a control unit 21 connected to the sensor 20. The control unit 21 is programmed to perform the assembly process on the basis of programmed instructions and using input signals from the sensor 20. The automation of this process is facilitated by the inclusion of the 'F' markers 16 on the electrode tabs 4 and 7.

Instead of being derived from the orientation of an asymmetric marker, like the `F' symbol, any required manipulations of the electrodes could be encoded directly in a marker produced on the tab, for example as part of a set of data encoded in a QR code or bar code. For example, a plurality of electrodes having their tabs oriented in the same way pass before a stationary QR reader prior to assembly. The code itself indicates whether or not the electrode needs to be flipped and/or rotated over a given angle before moving on in the assembly process.

The invention is not limited to tabs as represented in the drawings, i.e. having both a QR code 15 and an orientation-related asymmetric marker 16. According to various embodiments, tabs could be provided with only a QR code (or equivalent, for example bar code), or with only an asymmetric marker, or with any number of markers of any type that may be suitable for a particular application.

Another embodiment could include the 'F' marker in combination with a movable sensor. The electrodes are presented to the sensor in random fashion, face up or face down and with their tabs extending either up or down or left or right from the coated electrode. The sensor moves to the tab positions and detects the orientation of the 'F' markers, deriving therefrom a possible required rotation angle and/or the need to flip the electrode.

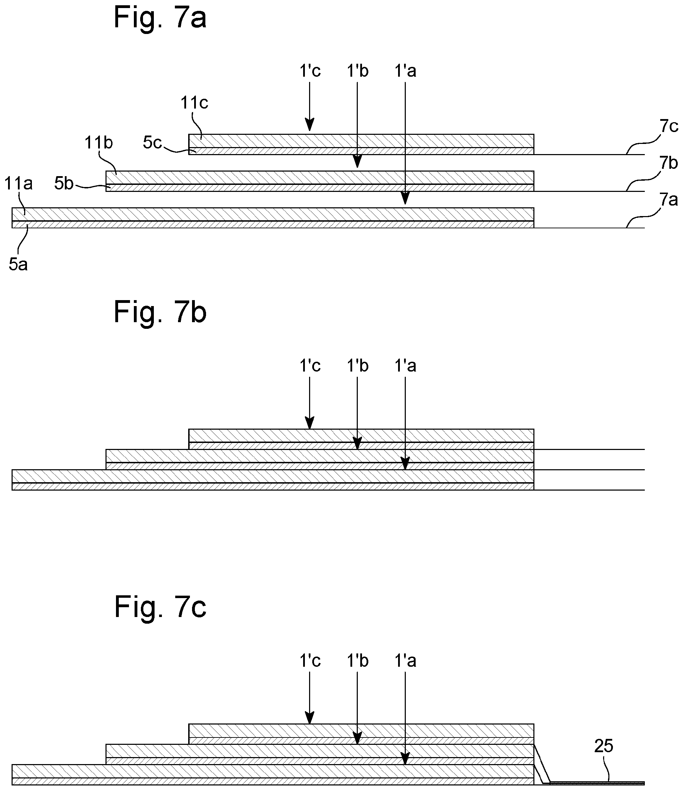

Another possible use of marker-encoded information provided on the tabs is illustrated with reference to Figures 7a to 7c. Figure 7a illustrates three monocells 1'a to 1'c in a simplified section view, the section plane passing through the anode tabs 7a to 7c. Each monocell includes an anode (5a to 5c) with the anode tab integral therewith and a cathode-containing pocket (11a to 11c) attached to the anode. The cathodes are equally provided with cathode tabs (not visible in the particular section view shown in Figure 7a). It is seen that the dimensions of the three monocells are not the same for all three monocells and that a particular stacking order of the monocells is required, starting from the largest cell 1'a at the bottom of the stack to the smallest cell 1'c at the top. According to an embodiment of the invention, markers (not shown) are produced on the anode tabs 7a-7c and/or on the cathode tabs, wherein the markers are indicative of the required sequence number (for example expressed as 1, 2, 3 or bottom, middle, top) of each monocell in the stacking order. The markers could be again QR codes, or simply numerical sequence numbers readable by an optical sensor. This enables enhanced automation of a monocell stacking process applied for producing a battery. Monocells of various sizes may be presented to a sensor coupled to a control unit, which commands the stacking of the monocells in a required stacking order based on the detected sequence numbers or codes. In the example shown, the monocells are stacked in the correct order as illustrated in Figure 7b, and the tabs of the same type (anode and cathode) are interconnected and welded together by a weld seam 25, as illustrated in Figure 7c. The stacking of the monocells is an example of a 'required manipulation' of the electrodes as indicated by markers produced on the electrode tabs.

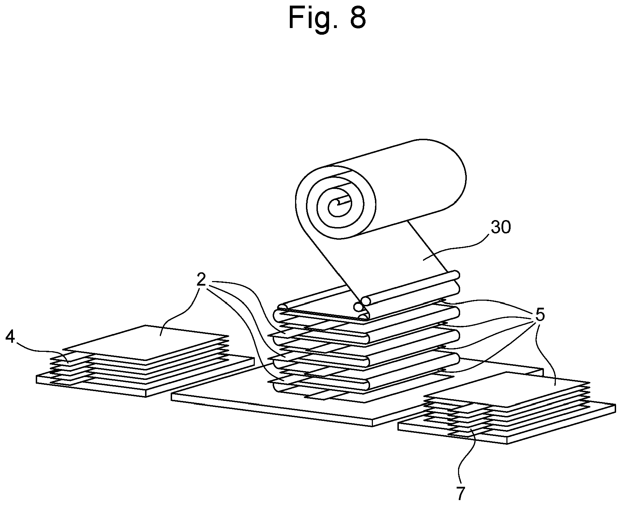

As stated above, the invention is not only applicable to batteries produced by stacking monocells. For example, the invention may be applied to a battery produced by the Z-folding technique, illustrated in Figure 8. According to this technique, rectangular electrodes 2 of a first type (cathode or anode) and rectangular electrodes 5 of a second type are produced by cutting the electrodes from respective foils and subsequently stacking the electrodes alternately while a separator sheet 30 is inserted in serpentine fashion between any two adjacent electrodes. Markers as described above may be produced on the tabs 4,7 of the electrodes. The markers could be indicative of technical and/or reference information regarding the electrodes, or of required manipulations of the electrodes, for example of the need to flip and/or rotate an electrode prior to adding said electrode to the stack.

Although the invention finds it most useful applications in batteries comprising stacked electrodes, like the stacked monocell battery or the battery produced by the Z-folding technique, the invention is applicable to any battery comprising at least two electrodes of the coated foil type, i.e. batteries comprising electrodes formed of a thin foil with a coating applied thereon and further comprising a non-coated tab. This includes for example a battery comprising an electrode assembly obtained by the winding technique: a stack of two coated foil-type electrodes and two separator sheets is wound onto itself to form a so-called 'jellyroll', which is inserted in a battery container after which the tabs are connected to the battery contacts. In any of such batteries, one or more markers may be produced on at least one of the tabs, containing relevant information regarding the electrodes as such, or regarding required manipulations of the electrodes, wherein said manipulations may be performed on the basis of command signals derived from reading out the markers by a suitable read-out device.

## Claims

1. A method for producing a battery comprising at least one pair of a first electrode (2) and a second electrode (5), with a separator sheet (8, 9) arranged between the first and second electrode, each electrode comprising a coated metal foil portion (3, 6) and a non-coated metal tab (4, 7),
**characterized in that** the method comprises producing one or more markers (15, 16) on the tab (4) of the first electrode (2) and/or on the tab (7) of the second electrode (5), thereby obtaining at least one marked tab, wherein said one or more markers are indicative of one or more of the following:
- technical and/or reference information related to the electrode to which the marked tab is attached,
- information regarding required manipulations of the electrode to which the marked tab is attached, wherein the method includes reading a marker on the marked tab and performing a manipulation of the electrode based on information derived from said marker.

2. A method according to claim 1, wherein said manipulations include flipping and/or in-plane rotating of the electrode (2, 5) to which the marked tab is attached.

3. A method according to claim 1 or 2, wherein said manipulations include stacking multiple of said pairs of a first electrode and a second electrode.

4. A method according to any one of the preceding claims, wherein the one or more markers on said at least one tab include a code (15) readable by a digital code reader and/or an asymmetric symbol (16) readable by an optical sensor.

5. A method according to any one of the preceding claims, wherein the one or more markers (15, 16) are produced by laser engraving.

6. A method according to any one of the preceding claims, wherein the first electrode (2) and the second electrode (5) are cut from respective first and second foils, and wherein the one or more markers (15, 16) are produced before or after cutting the electrodes from said foils.

7. A method according to any one of the preceding claims, for producing a battery comprising a stack formed of stacked pairs of said first and said second electrode (2, 5) and further formed of separator sheets (8, 9) arranged between adjacent electrodes of the stack, the method comprising the steps of:
- producing the pairs of the first and second electrodes (2, 5) with the respective tabs (4, 7) attached thereto,
- alternatingly stacking the first and second electrodes (2, 5) of multiple of said electrode pairs, wherein separator sheets (8, 9) are arranged between adjacent stacked electrodes,
- interconnecting the tabs (4) of the first electrodes (2) and interconnecting the tabs (7) of the second electrodes (5) and connecting the respective interconnected tabs to a first and second battery contact.

8. A method according to claim 7, wherein a sequence-related marker is produced on the tabs (4) of the first electrodes (2) and/or the tabs (7) of the second electrodes (5) of said electrode pairs, said sequence-related marker being indicative of a sequence number of the electrodes in a stacking order characterizing said stack, the method further comprising reading said sequence-related marker and stacking the electrode comprising said sequence-related marker, based on said sequence number.

9. A method according to claim 7 or 8, wherein the method comprises producing and stacking multiple monocells (1'), each monocell comprising said first and said second electrode (2,5), and wherein each monocell is assembled by the following assembly process:
- inserting the first electrode (2) between two separator sheets (8, 9) and attaching the separator sheets to each other along an attachment lane (10) around the first electrode's coated metal foil portion (3), thereby obtaining a pocket (11) formed of the separator sheets and containing the first electrode (2), with the tab (4) of the first electrode extending out of said pocket (11),
- superposing the second electrode (5) on or under the pocket (11) containing the first electrode (2) and attaching the second electrode to said pocket (11).

10. A method according to claim 9, wherein said manipulations include flipping or in-plane rotating of said pocket (11) containing the first electrode (2) and/or flipping or in-plane rotating of the second electrode (5).

11. A battery comprising at least one pair of a first and a second electrode (2, 5), each electrode comprising a coated metal foil portion (3, 6) and a non-coated metal tab (4, 7), **characterized in that** one or more markers (15, 16) are present on the tab of the first electrode and/or on the tab of the second electrode, wherein said one or more markers are indicative of one or more of the following:
- technical and/or reference information related to the electrode to which the marked tab is attached,
- information regarding required manipulations of the electrode to which the marked tab is attached, said manipulations being required during a production process for producing the battery.
